# FASCICULE DE BREVET EUROPEEN

(11) **EP 3 406 164 B1**
(45) Date de publication et mention de la délivrance du brevet: **04.12.2019**
(21) Numéro de dépôt: 18169672.5
(22) Date de dépôt: 26.04.2018
(51) Int. Cl.: A47J 31/60

(54) **MACHINE À CAFÉ MUNIE D'UNE GOULOTTE MOBILE D'INTRODUCTION D'UNE PASTILLE DE NETTOYAGE**
KAFFEEMASCHINE MIT BEWEGLICHER SCHACHT ZUM EINFÜHREN EINER REINIGUNGSTABLETTE
COFFEE MACHINE COMPRISING A MOVABLE CHUTE FOR INTRODUCING A CLEANING TABLET

(30) Priorité: 28.04.2017 FR 1753778
(43) Date de publication de la demande: 28.11.2018
(73) Titulaire: SEB S.A., 69130 Ecully (FR)
(72) Inventeur: HIRON, Frédéric, 72130 SAINT OUEN DE MIMBRE (FR); BICHET, Fabrice, 53100 MAYENNE (FR); VITEL, Arnaud, 53240 ANDOUILLE (FR)
(74) Mandataire: Bourrières, Patrice

(56) Documents cités:
- WO-A1-99/12456
- DE-U1- 20 312 094

## Description

La présente invention se rapporte au domaine technique général des machines à café automatiques comportant une chambre d'infusion dans laquelle est disposée de la mouture de café pour préparer une boisson.

Il est connu des machines à café automatiques KRUPS® espresseria automatic de pouvoir nettoyer une chambre d'infusion et un circuit de distribution du café vers une tasse. La chambre d'infusion comporte une ouverture supérieure par laquelle la chambre d'infusion est destinée à recevoir de la mouture. La machine comporte une goulotte d'introduction d'une pastille de nettoyage dans la chambre d'infusion par l'ouverture supérieure, la goulotte comportant une extrémité inférieure de distribution de la pastille agencée à proximité de l'ouverture supérieure et une extrémité supérieure. L'extrémité supérieure comporte une ouverture d'introduction de la pastille agencée en partie supérieure de la machine. Une telle machine est décrite dans le document DE-U-20312094.

Cependant, après un cycle d'infusion pour préparer une boisson, la vapeur d'eau qui s'échappe par l'ouverture de la chambre d'infusion peut s'introduire en partie dans la goulotte par l'extrémité inférieure et être canalisée en partie supérieure de la machine pour s'échapper par l'ouverture d'introduction de la pastille.

De plus, il existe un risque d'introduire accidentellement un corps étranger dans la chambre d'infusion par l'ouverture d'introduction de la pastille.

Le but de la présente invention est de remédier aux inconvénients précités et de proposer une machine à café automatique qui présente une mise en œuvre simple et ergonomique.

Un autre but de la présente invention est de proposer une machine à café automatique qui présente une conception simple et qui soit économique à mettre en œuvre.

Ces buts sont atteints avec une machine à café automatique comportant une chambre d'infusion destinée à recevoir de la mouture et munie d'une ouverture supérieure, un circuit de distribution du café et une goulotte d'introduction d'une pastille de nettoyage dans la chambre d'infusion par l'ouverture supérieure, ladite goulotte comportant une extrémité inférieure de distribution de ladite pastille pour permettre de réaliser un nettoyage de la chambre d'infusion et du circuit de distribution du café, caractérisée en ce que l'extrémité inférieure de la goulotte est mobile entre une position d'attente dans laquelle elle est écartée de l'ouverture supérieure et une position d'introduction dans laquelle elle est adjacente ou au-dessus de l'ouverture supérieure pour permettre l'introduction de la pastille de nettoyage dans la chambre d'infusion.

Par goulotte, on comprend un conduit ou un tuyau incliné agencé au-dessus de la chambre d'infusion et permettant de guider la descente de la pastille et son introduction dans la chambre d'infusion.

Ainsi, lors d'un cycle de nettoyage l'extrémité inférieure de la goulotte est proche de l'ouverture supérieure de la chambre d'infusion pour permettre de manière sûre d'introduire la pastille de nettoyage. En dehors d'un cycle de nettoyage, notamment lors de la réalisation d'un cycle de préparation d'un café, l'extrémité inférieure est écartée de l'ouverture supérieure. En conséquence, la vapeur d'eau qui s'échappe par l'ouverture supérieure de la chambre d'infusion ne s'introduit que très peu dans la goulotte par l'extrémité inférieure.

Avantageusement, la goulotte comporte une extrémité supérieure d'introduction munie d'une ouverture par laquelle la pastille peut être introduite, ladite ouverture étant fermée dans la position d'attente et ouverte dans la position d'introduction.

Ainsi, l'ouverture de l'extrémité supérieure d'introduction est fermée dans la position d'attente. En conséquence, le risque d'introduire accidentellement un corps étranger dans la chambre d'infusion par la goulotte est réduit.

De manière avantageuse, la goulotte comporte un organe de manœuvre permettant de déplacer l'extrémité inférieure entre la position d'attente vers la position d'introduction et réciproquement.

Ainsi, l'extrémité inférieure peut être déplacée manuellement, ce qui est une solution simple à mettre en œuvre.

De préférence, la goulotte est mobile entre une position d'attente dans laquelle l'extrémité inférieure est écartée de l'ouverture supérieure et une position d'introduction dans laquelle l'extrémité inférieure est adjacente ou au-dessus de l'ouverture supérieure pour permettre l'introduction de la pastille de nettoyage dans la chambre d'infusion.

Ainsi, l'ensemble de la goulotte est mobile.

De manière avantageuse, la goulotte est mobile en translation.

De préférence, la machine à café automatique comporte un châssis et l'extrémité supérieure de la goulotte est agencée de manière coulissante sur le châssis.

De manière avantageuse, l'ouverture de l'extrémité supérieure d'introduction est fermée dans la position d'attente par une paroi du châssis, l'ouverture étant libérée lors du déplacement de la goulotte de la position d'attente vers la position d'introduction.

Ainsi, cette fonction libération/fermeture de l'ouverture est réalisée de manière économique avec une paroi du châssis, sans pièce supplémentaire.

Avantageusement, la goulotte s'étend au-dessus d'un plan comportant l'ouverture supérieure de la chambre d'infusion et la chambre d'infusion comporte un axe vertical, la goulotte s'étendant selon une direction inclinée d'un angle α par rapport à l'axe vertical.

Une telle disposition permet de guider la descente de la pastille et son introduction dans la chambre d'infusion par l'ouverture.

De préférence, la machine à café automatique comporte un piston presseur monté mobile en translation sur une course s'étendant entre une position haute de retrait dans laquelle la pastille peut être introduite dans la chambre d'infusion et une position basse de tassage dans laquelle il pénètre dans la chambre d'infusion pour la fermer de manière étanche.

Avantageusement, la machine à café automatique comporte une chaudière et une pompe permettant d'alimenter en eau chaude la chambre d'infusion et de dissoudre la pastille pour nettoyer la chambre d'infusion et le circuit de distribution.

De préférence, la machine à café automatique comporte un réservoir à grain de café, l'ouverture de l'extrémité supérieure d'introduction de la goulotte étant agencée de manière adjacente au réservoir à grain, en une partie supérieure de la machine à café automatique.

Ainsi, le chargement du réservoir et l'introduction de la pastille dans la goulotte sont réalisés en une partie supérieure de la machine à café automatique, facilement accessible par l'utilisateur. En conséquence, on obtient une machine à café automatique particulièrement ergonomique.

L'invention sera mieux comprise à l'étude du mode de réalisation pris à titre nullement limitatif et illustré dans les figures annexées dans lesquelles :
- La figure 1 illustre une vue en perspective d'une machine à café automatique selon un mode particulier de réalisation de l'invention.
- La figure 2 illustre une vue en perspective de la goulotte vue de l'arrière de la machine à café automatique illustrée sur la figure 1.
- La figure 3 illustre une vue en perspective écorchée de la machine à café automatique illustrée sur la figure 1, la goulotte étant dans une position d'introduction.
- La figure 4 illustre une vue en perspective écorchée de la machine à café automatique illustrée sur la figure 1, la goulotte étant dans une position d'attente.

On notera que, dans ce document, les termes « horizontal », « vertical », « inférieur », « supérieur », « longitudinal », « transversal », « haut », « bas », employés pour décrire la machine à café automatique font référence à cette machine reposant sur un plan de travail, en situation d'usage.

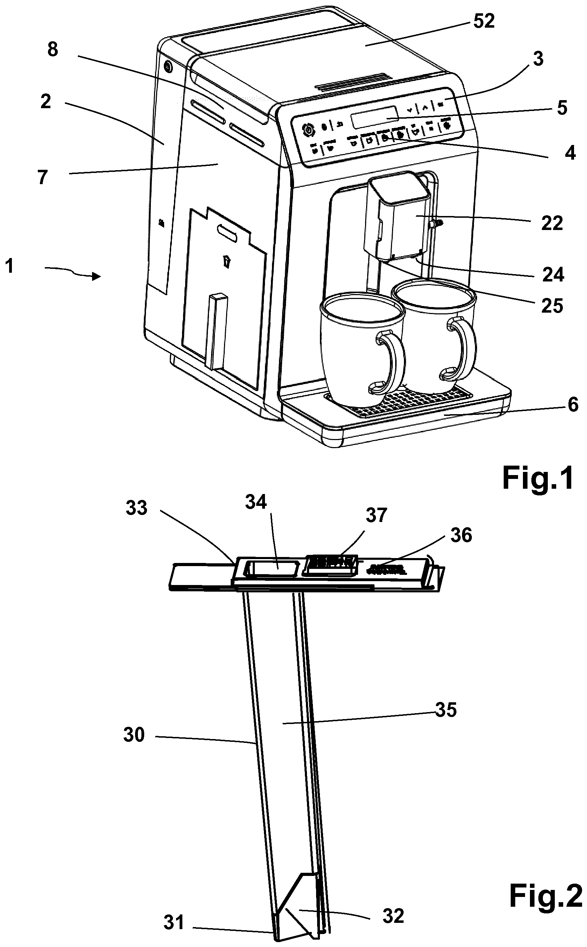

Dans l'exemple de réalisation représenté aux figures 1 à 4, une machine à café automatique 1 comporte un réservoir 2 formant une alimentation en eau froide, un dispositif d'infusion 10, un distributeur de café en poudre provenant d'un broyeur à café intégré au distributeur (non représentés sur les figures), une tête de distribution du café 22 et un dispositif électronique de contrôle 3 pour la commande et la gestion des cycles de préparation des boissons infusées, notamment du café. Le dispositif de contrôle 3 comporte un clavier 4 muni d'un afficheur 5 pour notamment permettre à un utilisateur de commander un cycle de nettoyage.

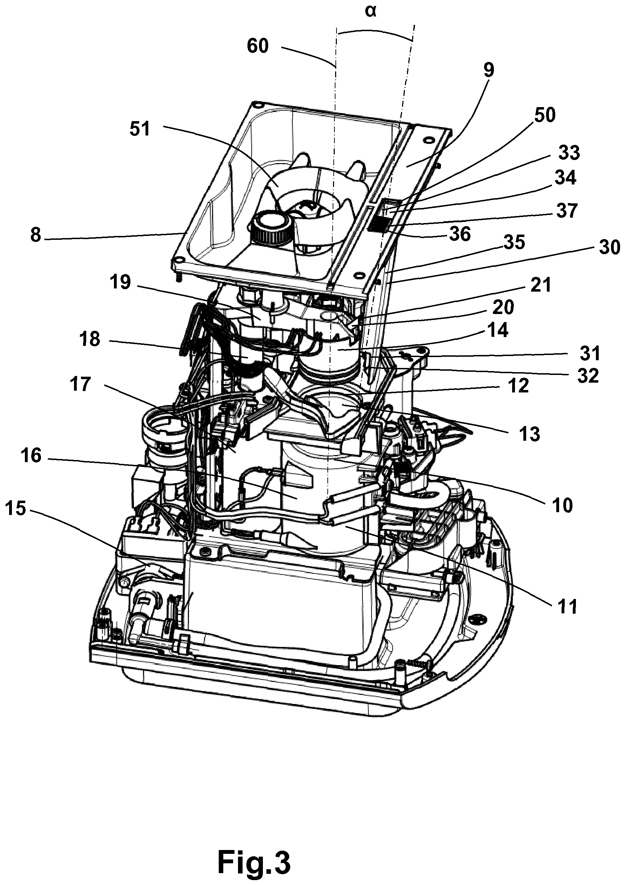

Le dispositif d'infusion 10 illustré à la figure 3 comprend un corps 11 s'étendant longitudinalement selon un axe vertical 60 et renfermant une chambre d'infusion 12 munie d'une ouverture supérieure 13. La chambre d'infusion 12 est susceptible de recevoir un piston presseur 14 monté déplaçable selon l'axe longitudinal vertical au moyen d'un mécanisme d'entraînement. Le dispositif d'infusion 10 comporte également une pompe électrique 15, destinée à créer une circulation d'eau et d'infusion, ainsi qu'une chaudière 16 destinée à chauffer l'eau pour la préparation du café dans la chambre d'infusion 12. Le corps 11 est agencé latéralement à un vérin hydraulique 17 à simple effet comportant une tige supérieure 18 portant un bras 19 formant potence et dont l'extrémité libre est reliée au piston presseur 14, les courses du piston presseur 14 et du vérin hydraulique 17 étant ainsi effectuées selon des directions parallèles. Le piston presseur 14 parcourt une course entre une position haute de retrait pour laquelle il est situé au-dessus de la chambre d'infusion 12 et une position basse de tassage pour laquelle il pénètre dans la chambre d'infusion 12 par l'ouverture supérieure 13. Dans la position basse de tassage, le piston presseur 14 comprime la mouture admise dans la chambre d'infusion 12 pour former une galette de mouture comprimée.

La chaudière 16 et le corps 11 sont formés en une seule pièce de matériau conducteur de la chaleur qui contient une résistance électrique chauffante, des canaux de passage et de chauffage de l'eau dont des entrées sont reliées, via la pompe électrique 15 au réservoir 2 d'eau froide et dont des extrémités débouchent sur le fond de la chambre d'infusion 12. Le piston presseur 14 présente un conduit 20 de passage de l'infusion débouchant par un orifice de sortie 21, tandis que la pompe électrique 15 est adaptée à créer une circulation d'eau ascendante dans la chambre d'infusion 12 vers le conduit 20 lorsque le piston presseur 13 ferme la chambre d'infusion 12. Un tel dispositif d'infusion 10 a par exemple été décrit plus en détail dans la demande de brevet WO9912456.

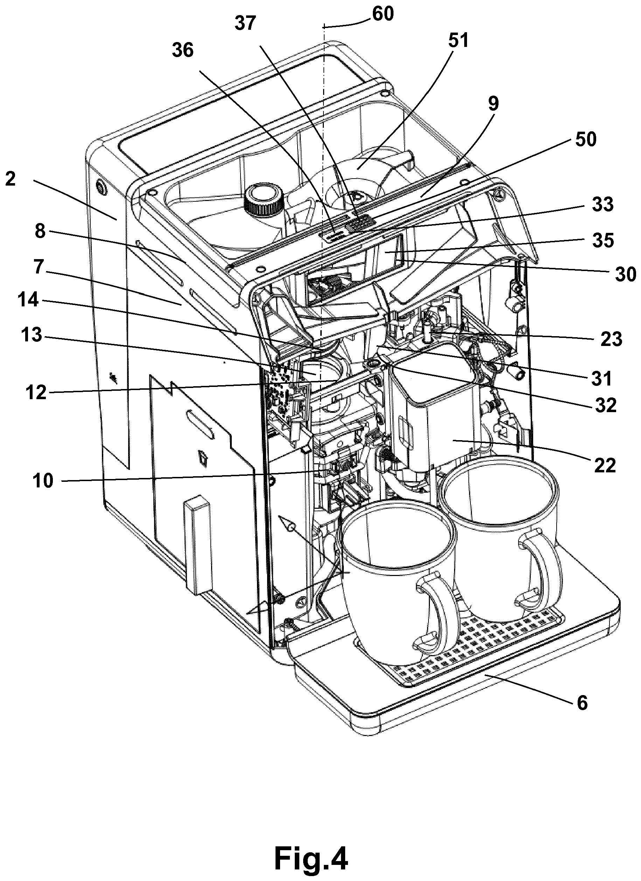

L'orifice de sortie 21 du conduit 20 de passage de l'infusion du piston presseur 14 est relié à un conduit 23 (Fig.4) agencé dans une tête de distribution du café 22 par un tuyau souple (non représenté sur les figures). Le conduit 23 agencé dans la tête de distribution 22 se divise en deux pour former deux sorties 24, 25 de café. La machine à café automatique présente donc un circuit de distribution du café formé par le conduit 20 de passage agencé dans le piston presseur 14, le tuyau souple, le conduit 23 et les deux sorties 24, 25 de café. La tête de distribution 22 est agencée au-dessus d'un repose-tasse 6 et elle est montée mobile en translation verticale pour permettre à un utilisateur d'ajuster la position des sorties 24, 25 de café à la hauteur de la tasse.

Tel que visible sur les figures 2 à 4, la machine à café automatique 1 comporte une goulotte 30 d'introduction d'une pastille de nettoyage dans la chambre d'infusion 12 par l'ouverture supérieure 13. La machine à café automatique 1 comporte un châssis 7 comprenant une partie supérieure 8. La goulotte 30 est montée mobile en translation sur la partie supérieure 8 entre une position d'attente (Fig.4) dans laquelle une extrémité inférieure 31 de la goulotte 30 est écartée de l'ouverture supérieure 13 et une position d'introduction (Fig.3) dans laquelle l'extrémité inférieure 31 est adjacente à l'ouverture supérieure 13. La goulotte 30 comporte une extrémité supérieure 33 d'introduction munie d'une ouverture 34 par laquelle une pastille peut être introduite.

La partie supérieure 8 du châssis 7 comporte une paroi 9 munie d'une fenêtre 50 sous laquelle coulisse la goulotte 30. L'ouverture 34 de l'extrémité supérieure 33 d'introduction est décalée sous la paroi 9 dans la position d'attente et se trouve ainsi fermée. Lors du déplacement de la goulotte 30 de la position d'attente vers la position d'introduction, l'ouverture 34 se trouve alignée avec la fenêtre 50 et elle est ainsi libérée pour permettre le passage d'une pastille de nettoyage.

La goulotte 30 comporte un conduit incliné 35 qui s'étend au-dessus d'un plan comportant l'ouverture supérieure 13 de la chambre d'infusion 12. L'extrémité supérieure 33 comporte un élément 36 agencé transversalement au conduit incliné 35 (Fig.2). L'élément 36 est monté mobile en translation sur la paroi 9 de la partie supérieure 8 par une glissière. L'élément 36 comporte un organe de manœuvre 37 agencé dans la fenêtre 50. Dans la position d'attente, l'élément 36 ferme la fenêtre 50.

La goulotte 30 s'étend selon une direction inclinée d'un angle α par rapport à l'axe vertical 60 de la chambre d'infusion 12. L'extrémité inférieure 31 comporte une ouverture 32 qui est tangente à un cylindre matérialisé par la course du piston presseur 14 entre la position haute de retrait et la position basse de tassage. Ainsi, dans la position d'introduction (Fig.3), le piston presseur 14 peut se déplacer sans interférer avec l'extrémité inférieure 31.

La machine à café automatique 1 comporte un réservoir à grain de café 51 agencé dans la partie supérieure 8 du châssis 7. L'ouverture 34 de l'extrémité supérieure 33 d'introduction est agencée de manière adjacente au réservoir à grain de café 51. La machine à café automatique 1 comporte un couvercle 52 agencé au-dessus de la partie supérieure 8 du châssis 7. Le couvercle 52 est destiné à recouvrir l'extrémité supérieure 33 d'introduction de la goulotte 30 et le réservoir à grain de café 51.

En fonctionnement, l'utilisateur qui souhaite nettoyer la chambre d'infusion 12 et le circuit de distribution du café de la machine à café automatique 1 active à l'aide du clavier 4 un programme de nettoyage. L'afficheur 5 lui indique d'insérer une pastille de nettoyage dans la chambre d'infusion 12. Pour cela, il retire le couvercle 52 et il fait translater la goulotte 30 en poussant latéralement l'organe de manœuvre 37. Ainsi, l'ouverture 34 de l'extrémité supérieure 33 d'introduction passe de la position d'attente dans la position d'introduction dans laquelle l'ouverture 34 se trouve libérée et dans laquelle l'ouverture 32 de l'extrémité inférieure 31 est adjacente à l'ouverture supérieure 13 de la chambre d'infusion 12. Ainsi, la pastille de nettoyage déposée dans l'ouverture 34 de l'extrémité supérieure 33 d'introduction va être conduite par le conduit 23 de la goulotte 30 dans la chambre d'infusion 12. L'utilisateur peut ensuite faire translater la goulotte 30 de la position d'introduction dans la position d'attente dans laquelle l'ouverture 34 de l'extrémité supérieure 33 d'introduction se trouve fermée et dans laquelle l'ouverture 32 de l'extrémité inférieure 31 est écartée de l'ouverture supérieure 13 de la chambre d'infusion 12. Ainsi, la vapeur d'eau qui s'échappe par l'ouverture supérieure 13 de la chambre d'infusion 12 ne remonte pas dans la goulotte 30. L'ouverture 34 de l'extrémité supérieure 33 d'introduction étant fermée dans la position d'attente, le risque d'introduire accidentellement un corps étranger dans la chambre d'infusion 12 par la goulotte 30 est réduit. En conséquence, on obtient une machine à café automatique particulièrement sûre.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, la goulotte comporte un conduit souple et l'extrémité inférieure de la goulotte est mobile entre la position d'attente et la position d'introduction par déformation du conduit.

## Revendications

1. Machine à café automatique (1) comportant une chambre d'infusion (12) destinée à recevoir de la mouture et munie d'une ouverture supérieure (13), un circuit de distribution du café et une goulotte (30) d'introduction d'une pastille de nettoyage dans la chambre d'infusion (12) par l'ouverture supérieure (13), ladite goulotte (30) comportant une extrémité inférieure (31) de distribution de ladite pastille pour permettre de réaliser un nettoyage de la chambre d'infusion (12) et du circuit de distribution du café **caractérisée en ce que** l'extrémité inférieure (31) de la goulotte (30) est mobile entre une position d'attente dans laquelle elle est écartée de l'ouverture supérieure (13) et une position d'introduction dans laquelle elle est adjacente ou au-dessus de l'ouverture supérieure (13) pour permettre l'introduction de la pastille de nettoyage dans la chambre d'infusion (12).

2. Machine à café automatique (1) selon la revendication 1, **caractérisée en ce que** la goulotte (30) comporte une extrémité supérieure (33) d'introduction munie d'une ouverture (34) par laquelle la pastille peut être introduite, ladite ouverture (34) étant fermée dans la position d'attente et ouverte dans la position d'introduction.

3. Machine à café automatique (1) selon l'une quelconque des revendications précédentes, **caractérisée en ce que** la goulotte (30) comporte un organe de manœuvre (37) permettant de déplacer l'extrémité inférieure (31) entre la position d'attente vers la position d'introduction et réciproquement.

4. Machine à café automatique (1) selon l'une quelconque des revendications précédentes, **caractérisée en ce que** la goulotte (30) est mobile entre une position d'attente dans laquelle l'extrémité inférieure (31) est écartée de l'ouverture supérieure (13) et une position d'introduction dans laquelle l'extrémité inférieure (31) est adjacente ou au-dessus de l'ouverture supérieure (13) pour permettre l'introduction de la pastille de nettoyage dans la chambre d'infusion (12).

5. Machine à café automatique (1) selon la revendication 4, **caractérisée en ce que** la goulotte (30) est mobile en translation.

6. Machine à café automatique (1) selon la revendication 5, **caractérisée en ce qu'**elle comporte un châssis (7) et **en ce que** l'extrémité supérieure (33) de la goulotte (30) est agencée de manière coulissante sur le châssis (7).

7. Machine à café automatique (1) selon la revendication 6, **caractérisée en ce que** l'ouverture (34) de l'extrémité supérieure (33) d'introduction est fermée dans la position d'attente par une paroi (9) du châssis (7), l'ouverture (34) étant libérée lors du déplacement de la goulotte (30) de la position d'attente vers la position d'introduction.

8. Machine à café automatique (1) selon l'une quelconque des revendications précédentes, **caractérisée en ce que** la goulotte (30) s'étend au-dessus d'un plan comportant l'ouverture supérieure (13) de la chambre d'infusion (12) et **en ce que** la chambre d'infusion (12) comporte un axe vertical (60), la goulotte (30) s'étendant selon une direction inclinée d'un angle α par rapport à l'axe vertical (60).

9. Machine à café automatique (1) selon l'une quelconque des revendications précédentes, **caractérisée en ce qu'**elle comporte un piston presseur (14) monté mobile en translation sur une course s'étendant entre une position haute de retrait dans laquelle la pastille peut être introduite dans la chambre d'infusion (12) et une position basse de tassage dans laquelle il pénètre dans la chambre d'infusion (12) pour la fermer de manière étanche.

10. Machine à café automatique (1) selon l'une quelconque des revendications précédentes, **caractérisée en ce qu'**elle comporte une chaudière (16) et une pompe électrique (15) permettant d'alimenter en eau chaude la chambre d'infusion (12) et de dissoudre la pastille pour nettoyer la chambre d'infusion (12) et le circuit de distribution du café.

11. Machine à café automatique (1) selon l'une quelconque des revendications 2 à 10, **caractérisée en ce qu'**elle comporte un réservoir à grain de café (51), l'ouverture (34) de l'extrémité supérieure (33) de la goulotte (30) d'introduction étant agencée de manière adjacente au réservoir à grain de café (51), en une partie supérieure de la machine à café automatique.

## Patentansprüche

1. Automatische Kaffeemaschine (1), aufweisend eine Aufgusskammer (12), die dazu bestimmt ist, das Mahlgut aufzunehmen, und mit einer oberen Öffnung (13) versehen ist, eine Leitung zur Ausgabe von Kaffee und eine Rutsche (30) zur Einführung einer Pastille zur Reinigung in die Aufgusskammer (12) durch die obere Öffnung (13), wobei die Rutsche (30) ein unteres Ende (31) zum Ausgeben der Pastille aufweist, um es zu ermöglichten, eine Reinigung der Aufgusskammer (12) und der Leitung zur Ausgabe von Kaffee durchzuführen, **dadurch gekennzeichnet, dass** das untere Ende (31) der Rutsche (30) zwischen einer Warteposition, in der sie von der oberen Öffnung (13) beabstandet ist, und eine Einführposition beweglich ist, in der sie sich neben oder über der oberen Öffnung (13) befindet, um das Einführen der Pastille zur Reinigung in die Aufgusskammer (12) zu ermöglichen.

2. Automatische Kaffeemaschine (1) nach Anspruch 1, **dadurch gekennzeichnet, dass** die Rutsche (30) ein oberes Ende (33) zur Einführung aufweist, das mit einer Öffnung (34) versehen ist, durch das die Pastille eingeführt werden kann, wobei die Öffnung (34) in der Warteposition geschlossen und in der Einführposition geöffnet ist.

3. Automatische Kaffeemaschine (1) nach einem der vorhergehenden Ansprüche, **dadurch gekennzeichnet, dass** die Rutsche (30) ein Betätigungselement (37) aufweist, das es ermöglicht, das untere Ende (31) zwischen der Warteposition zu der Einführposition und umgekehrt zu bewegen.

4. Automatische Kaffeemaschine (1) nach einem der vorhergehenden Ansprüche, **dadurch gekennzeichnet, dass** die Rutsche (30) zwischen einer Warteposition, in der das untere Ende (31) von der oberen Öffnung (13) beabstandet ist, und einer Einführposition beweglich ist, in der sich das untere Ende (31) neben oder über der oberen Öffnung (13) befindet, um das Einführen der Pastille zur Reinigung in die Aufgusskammer (12) zu ermöglichen.

5. Automatische Kaffeemaschine (1) nach Anspruch 4, **dadurch gekennzeichnet, dass** die Rutsche (30) translationsbeweglich ist.

6. Automatische Kaffeemaschine (1) nach Anspruch 5, **dadurch gekennzeichnet, dass** sie einen Rahmen (7) aufweist, und dass das obere Ende (33) der Rutsche (30) verschiebbar an dem Rahmen (7) angeordnet ist.

7. Automatische Kaffeemaschine (1) nach Anspruch 6, **dadurch gekennzeichnet, dass** die Öffnung (34) des oberen Endes (33) zur Einführung in der Warteposition durch eine Wand (9) des Rahmens (7) geschlossen ist, wobei die Öffnung (34) während der Bewegung des Schachts (30) von der Warteposition zu der Einführposition freigegeben wird.

8. Automatische Kaffeemaschine (1) nach einem der vorhergehenden Ansprüche, **dadurch gekennzeichnet, dass** sich die Rutsche (30) über einer Ebene erstreckt, die die obere Öffnung (13) der Brühkammer (12) aufweist, und dass die Aufgusskammer (12) eine vertikale Achse (60) aufweist, wobei sich die Rutsche (30) in einer Richtung erstreckt, die unter einem Winkel α relativ zu der vertikalen Achse (60) geneigt ist.

9. Automatische Kaffeemaschine (1) nach einem der vorhergehenden Ansprüche, **dadurch gekennzeichnet, dass** sie einen Druckkolben (14) aufweist, der auf einem Weg translationsbeweglich angebracht ist, der sich zwischen einer oberen, zurückgezogenen Position, in der die Pastille in die Aufgusskammer (12) eingeführt werden kann, und einer unteren Position erstreckt, in der er in die Aufgusskammer (12) eintritt, um diese dicht zu verschließen.

10. Automatische Kaffeemaschine (1) nach einem der vorhergehenden Ansprüche, **dadurch gekennzeichnet, dass** sie einen Erhitzer (16) und eine elektrische Pumpe (15) aufweist, die es ermöglicht, die Brühkammer (12) mit heißem Wasser zu versorgen und die Pastille aufzulösen, um die Brühkammer (12) und die Leitung zur Ausgabe von Kaffee zu reinigen.

11. Automatische Kaffeemaschine (1) nach einem der Ansprüche 2 bis 10, **dadurch gekennzeichnet, dass** sie einen Kaffeebohnenbehälter (51) aufweist, wobei die Öffnung (34) des oberen Endes (33) der Zufuhrrutsche (30) neben dem Kaffeebohnenbehälter (51) an einem oberen Teil der automatischen Kaffeemaschine angeordnet ist.

## Claims

1. Automatic coffee machine (1) comprising an infusion chamber (12) intended to receive the grounds and equipped with an upper opening (13), a circuit for dispensing the coffee and a duct (30) of introducing a cleaning tablet in the infusion chamber (12) through the upper opening (13), said duct (30) comprising a lower end (31) for dispensing said tablet to make it possible to clean the infusion chamber (12) and the coffee dispensing circuit, **characterised in that** the lower end (31) of the duct (30) is mobile between a waiting position, wherein it is remote from the upper opening (13) and an introduction position, wherein it is adjacent or above the upper opening (13) to make it possible to introduce the cleaning tablet in the infusion chamber (12).

2. Automatic coffee machine (1) according to claim 1, **characterised in that** the duct (30) comprises an upper introduction end (33) equipped with an opening (34) by which the tablet can be introduced, said opening (34) being closed in the waiting position and open in the introduction position.

3. Automatic coffee machine (1) according to any one of the preceding claims, **characterised in that** the duct (30) comprises a moving member (37) making it possible to move the lower end (31) between the waiting position to the introduction position and vice versa.

4. Automatic coffee machine (1) according to any one of the preceding claims, **characterised in that** the duct (30) is mobile between a waiting position, wherein the lower end (31) is remote from the upper opening (13) and an introduction position, wherein the lower end (31) is adjacent or above the upper opening (13) to make it possible to introduce the cleaning tablet in the infusion chamber (12).

5. Automatic coffee machine (1) according to claim 4, **characterised in that** the duct (30) is mobile in translation.

6. Automatic coffee machine (1) according to claim 5, **characterised in that** it comprises a chassis (7) and **in that** the upper end (33) of the duct (30) is arranged sliding on the chassis (7).

7. Automatic coffee machine (1) according to claim 6, **characterised in that** the opening (34) of the upper introduction end (33) is closed in the waiting position by a wall (9) of the chassis (7), the opening (34) being released during the movement of the duct (30) from the waiting position to the introduction position.

8. Automatic coffee machine (1) according to any one of the preceding claims, **characterised in that** the drop (30) extends above a plane comprising the upper opening (13) of the infusion chamber (12) and **in that** the infusion chamber (12) comprises a vertical axis (60), the duct (30) extending along a direction inclined by an angle α with respect to the vertical axis (60).

9. Automatic coffee machine (1) according to any one of the preceding claims, **characterised in that** it comprises a pressing piston (14) mounted mobile in translation on a course extending between a high removal position, wherein the tablet can be introduced into the infusion chamber (12) and a low compacting position, wherein it penetrates into the infusion chamber (12) to close it in a sealed manner.

10. Automatic coffee machine (1) according to any one of the preceding claims, **characterised in that** it comprises a heater (16) and an electric pump (15) making it possible to supply the infusion chamber (12) with hot water and dissolve the tablet to clean the infusion chamber (12) and the coffee dispensing circuit.

11. Automatic coffee machine (1) according to any one of claims 2 to 10, **characterised in that** it comprises a coffee bean tank (51), the opening (34) of the upper end (33) of the introduction duct (30) being arranged adjacent to the coffee bean tank (51), in an upper section of the automatic coffee machine.
